## Europäisches Patentamt

## European Patent Office

## Office européen des brevets

(19)

(11) **EP 1 051 801 B1**

(12) **EUROPÄISCHE PATENTSCHRIFT**

(45) Veröffentlichungstag und Bekanntmachung des Hinweises auf die Patenterteilung:
**10.04.2002 Patentblatt 2002/15**

(51) Int Cl.⁷: **H02P 21/00**

(21) Anmeldenummer: **99901502.7**

(86) Internationale Anmeldenummer:
**PCT/AT99/00025**

(22) Anmeldetag: **29.01.1999**

(87) Internationale Veröffentlichungsnummer:
**WO 99/39430 (05.08.1999 Gazette 1999/31)**

(54) **VERFAHREN ZUR REGELUNG VON EINER MECHANISCH DREHGEBERLOSEN DREHSTROMMASCHINE**

METHOD FOR REGULATING A THREE-PHASE MACHINE WITHOUT A MECHANICAL ROTARY TRANSDUCER

PROCEDE ET REGLAGE D'UN MOTEUR A COURANT TRIPHASE DEPOURVU DE CAPTEUR MECANIQUE DE ROTATION

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **30.01.1998 AT 18798**

(43) Veröffentlichungstag der Anmeldung:
**15.11.2000 Patentblatt 2000/46**

(73) Patentinhaber: **Schrödl, Manfred**
**7223 Sieggraben (AT)**

(72) Erfinder: **Schrödl, Manfred**
**7223 Sieggraben (AT)**

(74) Vertreter: **Krause, Peter et al**
**Sagerbachgasse 7**
**2500 Baden (AT)**

(56) Entgegenhaltungen:
**WO-A-92/19038          WO-A-96/23347**

**Beschreibung**

Die Erfindung betrifft ein Verfahren zur Regelung einer mechanisch drehgeberlosen, als asynchron oder synchron laufende Maschine ausgebildeten Drehstrommaschine, die über einen Umrichter mit Zwischenkreis gespeist ist, wobei für die Regelung Meßgrößen des Zwischenkreises unter Einbeziehung des aktuellen Schaltzustandes des Umrichters erfaßt werden.

So ist beispielsweise aus der WO 92/19038 ein Verfahren und eine Schaltungsanordnung zur Bestimmung maschinenbezogener elektromagnetischer und mechanischer Zustandsgrößen bekannt, die zur Regelung einer mechanisch drehgeberlosen Drehstrommaschine herangezogen werden. Bei diesem bekannten Verfahren werden zwei Strangströme gleichzeitig gemessen, um eine komplexe Kenngröße im Raum zu bestimmen. Dazu benötigt die Schaltungsanordnung zur Durchführung dieses Verfahrens aufwendige und damit teure, meist potentialtrennende Stromsensoren zur Durchführung der Berechnungen.

Zur hochwertigen Regelung von Drehstrommaschinen, insbesondere asynchron und synchron laufende Maschinen, letztere entweder durch Permenentmagneterregung, durch Reluktanzeffekt, das ist die unterschiedliche magnetische Leitfähigkeit in Abhängigkeit von der Rotorlage, oder durch eine Kombination von Permanentmagneterregung und Reluktanzeffekt wird die Lage des magnetischen Flusses herangezogen. Für Maschinendrehzahlen über einer gewissen Mindestflußdrehzahl kann die induzierte elektrische Spannung (EMK) durch diverse in der Literatur bekannte Verfahren erfaßt und von dieser auf die Flußlage geschlossen werden. Bei kleinen Flußdrehzahlen versagen EMK-basierende Flußerfassungsverfahren. Dann können Verfahren herangezogen werden, die in Echtzeit Lage- bzw. flußdichteabhängige magnetische Leitfähigkeiten erfassen und daraus die Rotor- bzw. Flußraumzeigerlage feststellen.

Bei Asynchronmaschinen beeinflußt der magnetische Hauptfluß in der Maschine den magnetischen Streuleitwert durch die Sättigung des Bleches, so daß bei Echtzeitmessung des magnetischen Streuleitwertes oder einer damit verwandten Größe auf die Flußlage geschlossen werden kann. Bei synchron laufenden Maschinen steht der magnetische Fluß in fester Beziehung zur Rotorlage, wodurch bei synchron laufenden Maschinen die Erfassung des magnetischen Flusses oder die Erfassung der Rotorlage zur feldorientierten Regelung herangezogen werden kann. Bei synchron laufenden Maschinen mit Permanentmagneterregung ohne nennenswerten Reluktanzeffekt, beispielsweise wenn Permanentmagnete auf einem zylindrischen Rotor aufgebracht sind, kann bei einer Sättigung im Eisen wie bei Asynchronmaschinen die sättigungsabhängige magnetische Leitfähigkeit in Abhängigkeit von der Flußlage, über den Streuleitwert bei dämpferbehafteten Maschinen, oder dem Hauptfeldleitwert bei dämpferlosen Maschinen, durch ihre Echtzeiterfassung oder durch Erfassung einer zu ihr verwandten Größe auf die Flußlage und auch auf die Rotorlage geschlossen werden. Bei synchron laufenden Maschinen mit Reluktanzeffekt wird in gleicher Weise anstelle der sättigungsabhängig schwankenden magnetischen Leitfähigkeit die rotorgeometrieabhängig schwankende magnetische Leitfähigkeit erfaßt und damit gleichzeitig die Rotorlage festgestellt Bei synchron laufenden Maschinen mit Permanentmagneterregung und Reluktanzeffekt wird der Sumnneneffekt aus sättigungs- und geometrieabhängiger Leitfähigkeitsschwankung herangezogen.

Wie schon in VDI-Fortschrittberichte, Reihe 21, Nr. 117, VDI-Verlag, Düsseldorf 1992, "Sensorless Control of A.C. Machines" von M. Schrödl beschrieben, kann durch Erfassen des Stromänderungsraumzeigers und Division durch den Spannungsraumzeiger eine mit der doppelten elektrischen Rotor- bzw. Flußlage schwankende komplexe Größe gewonnen werden, die über trigonometrische Beziehungen die Rotorlage oder die Flußlage liefert. Der Nachteil des dort angegebenen Verfahrens liegt darin, daß zur Erfassung des Stromraumzeigers die Erfassung von mindestens zwei Strangströmen unter Verwendung teurer Strangstromsensoren, wie etwa Transfo-Shunts, nötig ist.

Ferner ist aus der WO 96/23347 ein Verfahren zur Bestimmung eines Strangstromes einer umrichtergespeisten Drehstrommaschine mittels des Zwischenkreisstromes bekannt, wobei eine Auswertung des aktuellen Schaltzustandes des Umrichters vorgenommen wird. Dabei wird aufgezeigt, daß der Strom in der Maschine durch zwei separate Messungen einer pulsweitenmodulierten Steuerung im Zwischenkreis erfaßt wird. Es werden dabei die zwei separaten Messungen zur Unterdrückung von Fehlern durch verschobene Meßzeiten innerhalb einer Pulsweitenperiode verwendet.

Aufgabe der Erfindung ist es, ein Verfahren der eingangs zitierten Art zu schaffen, das einerseits die oben aufgezeigten Nachteile vermeidet und das andererseits eine bessere bzw. genauere Regelung der Maschine gewährleistet.

Das erfindungsgemäße Verfahren ist dadurch gekennzeichnet, daß bei Asynchronmaschinen die zur feldorientierten Regelung notwendige Flußrichtung und bei synchron laufenden Maschinen zur rotororientierten Regelung die Rotorposition über die räumlich magnetischen Leitwertsschwankungen in der Maschine meßtechnisch erfaßt werden, wobei die Leitwertsschwankungen über Meßgrößen des Zwischenkreises, insbesondere über den Zwischenkreisstromanstieg und/oder die Zwischenkreisspannung und unter Einbeziehung des aktuellen Schaltzustandes des Umrichters erfaßt werden und daß anschließend eine mathematische Auswertung zur Berechnung der Flußrichtung bzw. der Rotorposition erfolgt. Mit der Erfindung ist es erstmals möglich, ein Verfahren zur hochwertigen Regelung von Drehstrommaschinen ohne mechanische Geber, wie Lagegeber oder Tachogeneratoren, die bei beliebigen Betriebszuständen, einschließlich kleiner Drehzahlen und Stillstand funktioniert, zu schaffen, wobei ausschließlich Meßgrößen des Zwischenkreises, wie Zwischenkreisstrom bzw. Zwischenkreisspannung, gemessen werden. Dabei wird durch Verwendung des aktuellen Umrichter-Schaltzustandes das Verhältnis von Strangstromanstiegen zu den hervorrufenden Spannungen ermittelt, welches mit der Fluß- bzw. Rotorlage der Drehstrommaschine korrespondiert.

Der Grundgedanke ist, die beschriebenen Leitwertsschwankungen über Stromanstiegsmessungen in den Maschinensträngen zu erfassen. Das erfindungsgemäße Verfahren vermeidet teure Stromsensoren, indem es nicht die volle Raumzeigerinformation benötigt, sondern nur die Projektionen des Stromanstiegsraumzeigers und des korrespondierenden Spannungsraumzeigers auf die Motorstrangachsen. Das Verhältnis dieser Größen (künftig y mit Index der Strangbezeichnung bezeichnet) ist proportional zum aktuellen lokalen magnetischen Leitwert in der betrachteten Strangachse und schwankt mit der doppelten Rotor- bzw. Flußachsenlage. Erfindungsgemäß wird nun zur Erfassung der Strangstromanstiege nicht eine Strangstromanstiegsmessung, sondern eine Zwischenkreisstromanstiegsmessung unter Verwendung des aktuellen Umrichter-Schaltzustands herangezogen. Der Umrichter dient also als intelligenter Meßstellen-Umschalter, der je nach Umrichterzustand die verschiedenen Motorstränge an den Zwischenkreisstrommeßmodul legt. Dabei können die betriebsmäßig auftauchenden Umrichterzustände - die Maschinenregelung wird durch die Messung nicht beeinflußt - oder erzwungene Umrichterzustände - die Maschinenregelung wird durch die Messung beeinflußt - herangezogen werden. Liegt beispielsweise bei einem dreiphasigen Umrichter der mit Strang U verbundene Umrichterbrückenzweig an positiver Zwischenkreisspannung und die an V und W angeschlossenen Umrichterbrückenzweige an negativer Zwischenkreisspannung, so wird im Zwischenkreis zwangsweise der Strangstrom des Stranges U fließen und es wird also dieser Strangstrom über den Zwischenkreis erfaßt. Gleichzeitig ist aber bekannt, daß bei dieser Umrichterkombination der an der Maschine anliegende Spannungsraumzeiger in Strangrichtung U zeigt, so daß das erwähnte Verhältnis der Projektionen des Stromanstiegsraumzeigers - im erwähnten Fall ist das der Stromanstieg im Strang U - und des korrespondierenden Spannungsraumzeigers - in dem Fall der Spannungsraumzeiger in Strangrichtung U - auf die Motorstrangachsen gebildet werden kann. Es wird also yu gebildet. Mittels eines dreiphasigen Umrichters und einer dreiphasigen Maschine können also durch sechs Umrichterzustände die erwähnten Verhältnisse in Richtung U, -U, V, -V, W, -W gebildet werden.

Zur Präzisierung der mathematischen Auswertung wird ausgeführt: Die Leitwertschwankungen werden über Meßgrößen des Zwischenkreisstromes und/oder der Zwischenkreisspannung und unter Einbeziehung des aktuellen Schaltzustandes des Umrichters erfaßt, indem die Stromanstiegsdifferenz im Zwischenkreis während konstantem Umrichter-Schaltzustand gebildet und zum dabei anliegenden Spannungsraumzeigerbetrag ins Verhältnis gesetzt wird. Dieser mathematisch ermittelte Wert steht zu der mit doppelter, räumlicher Winkellage schwankenden Maschineninduktivität in eindeutigem, bekanntem mathematischen und maschinentheoretischem Zusammenhang. Femer wird dieser mathematisch ermittelte Wert jenem Maschinenstrang zugeordnet, dessen Strangwicklungsachse mit der Richtung des durch den bekannten Umrichter-Schaltzustand festliegenden Spannungsraumzeigers übereinstimmt und diese Prozedur in mindestens einer Spannungsraumzeigerrichtung durchgeführt wird. Anschließend wird eine mathematische Auswertung nach bekannten Methoden der Mathematik und der Theorie elektrischer Maschinen zur Berechnung der Flußrichtung bzw. der Rotorposition durchgeführt.

Gemäß einem besonderen Merkmal der Erfindung werden mindestens zwei Messungen des Anstieges des Zwischenkreisstromes durchgeführt und die Meßwerte der beiden Anstiege in die Statorspannungsgleichungen eingesetzt und eine mathematische Verknüpfung durchgeführt. Ein wichtiger Vorteil dieses erfindungsgemäßen Verfahrens ist es, daß immer der gleiche Meßmodul zum Einsatz kommt, wodurch Meßfehler durch Bauteilstreuungen etc. bei der Kombination von mehreren Messungen kompensiert werden und nicht ins Ergebnis eingehen. So kann mit dieser Ausgestaltung der Erfindung durch die Kombination von zwei Messungen die EMK eliminiert werden und die Leitwertsmessung wird drehzahlunabhängig. Dies ist bei Messung des Stromraumzeigers über mindestens zwei Strangströme nicht möglich, da die beteiligten Stromsensoren verschiedene Meßfehler haben, welche ins Ergebnis eingehen.

Nach einer weiteren Ausgestaltung der Erfindung werden mindestens zwei Leitwertsmessungen in räumlich verschiedene Richtungen durchgeführt und die Meßwerte in die Modellgleichungen:

$$y_A = y_{mittel} + \Delta y \cos(2\gamma_A - 2\gamma)$$

$$y_B = y_{mittel} + \Delta y \cos(2\gamma_B - 2\gamma)$$

$$y_C = y_{mittel} + \Delta y \cos(2\gamma_C - 2\gamma)$$

eingesetzt und der Winkel $\gamma$ wird nach bekannten Rechenregeln berechnet. Wenn in der Statorwicklung eine induzierte Spannung (EMK) durch einen drehenden Rotor auftritt, wird das Verhältnis y von der EMK beeinflußt. Um diesen Einfluß zu eliminieren, werden zwei Stromanstiegsmessungen kombiniert und anstelle der Spannungen die Spannungsdifferenzen sowie anstelle der Stromanstiege die Stromanstiegsdifferenzen der beiden zu kombinierenden Messungen verwendet. Dies ist durch Aufschreiben der Statorspannungsgleichungen für die beiden zu kombinierenden Messungen und Subtraktion der beiden Gleichungen zu zeigen. Da auf der rechten Seite der Gleichungen additiv die EMK auftaucht, wird sie bei der Subtraktion eliminiert. Der mathematische Nachweis ist aus VDI-Fortschrittberichte, Reihe 21, Nr. 117, VDI-Verlag, Düsseldorf 1992, "Sensorless Control of A.C. Machines" von M. Schrödl, zu entnehmen. Dadurch wird die Erfassung der Leitwertsschwankung drehzahlunabhängig. Da aus einer Leitwertsmessung noch nicht in eindeutiger Weise auf den aktuellen Rotoroder Flußlagewinkel geschlossen werden kann, werden mindestens zwei Leitwertserfassungen in räumlich verschiedenen Richtungen kombiniert. Dadurch können bei Vorliegen von 3 linear unabhängigen Leitwertsmessungen A, B, C mit korrespondierenden Modellgleichungen der Leitwertsschwankungen

$$yA = ymittel + \Delta y \cos(2\gamma A - 2\gamma)$$

$$yB = ymittel + \Delta y \cos(2\gamma B - 2\gamma)$$

$$yC = ymittel + \Delta y \cos(2\gamma C - 2\gamma)$$

die mit dem doppelten Differenzwinkel zwischen Spannungsdifferenzraumzeiger $\gamma A$ etc. und Richtung des Leitwertsmaximums $\gamma$, welches entsprechend den obigen Ausführungen mit der Rotorlage oder Flußrichtung, je nach Maschinentyp, korrespondiert, die Parameter ymittel (mittlerer Leitwert) und $\Delta y$ (Leitwertsschwankung) eliminiert werden und der Winkel $\gamma$ wird nach bekannten Rechenregeln berechnet.

Gemäß einem weiteren besonderen Merkmal der Erfindung werden die meßtechnisch erfaßten Leitwerte unter, mit ausreichender Genauigkeit, gleichen Zwischenkreisspannungen erfaßt. Es kann auf die Zwischenkreisspannungserfassung verzichtet werden, wenn die kombinierten Leitwertsmessungen bei weitgehend gleichen Zwischenkreisspannungen erfolgt sind, da dann auch der Parameter Spannungsbetrag in obigen Gleichungen nur als konstanter Faktor, der in jeder Gleichung gleich ist, eingeht und deshalb bei der Berechnung des Winkels $\gamma$ eliminiert wird. Der Winkel $\gamma$ ist Basis der bekannten feld- bzw. rotororientierten Regelung zur unabhängigen Einstellung von Flußbetrag und Drehmoment von Drehstrommaschinen, wodurch diese Regelung auch bei kleinen Drehzahlen und Stillstand unter Verwendung des erfindungsgemäßen Verfahrens zur Rotor- bzw. Flußlage ohne einen Rotorlagegeber oder Tachogenerator bewerkstelligt werden kann.

Nach einer weiteren Ausgestaltung der Erfindung werden drehzahl- und / oder lastabhängige, vorzugsweise lineare, Korrekturfunktionen in der Form:

$$\gamma(\text{korrigiert}) = \gamma + \Delta\gamma \text{ (Drehzahl, Last)}$$

bei der mathematischen Berechnung durchgeführt. Drehzahl- und lastabhängige Einflüsse auf den Leitwertsverlauf können durch drehzahl- und lastabhängige, vorzugsweise lineare, Korrekturfunktionen in der obigen Form zwecks

Genauigkeitssteigerung berücksichtigt werden, wobei die Korrekturfunktionen mittels eines Referenzmodells, beispielsweise einem Flußmodell nach dem Stand der Technik bei Asynchronmaschinen, oder eines Referenzdrehgebers, beispielsweise die Drehwinkelmessung bei synchron laufenden Maschinen, einmal pro Maschinentyp ermittelt werden.

Gemäß einem weiteren Merkmal der Erfindung wird der ermittelte Fluß- bzw. Rotorlagewinkel als Eingangsgröße in ein Maschinenmodell zur Regelung der Drehstrommaschine on-line verwendet. Dadurch ist die Anwendung dieses erfindungsgemäßen Verfahrens funktionell eindeutig gewährleistet.

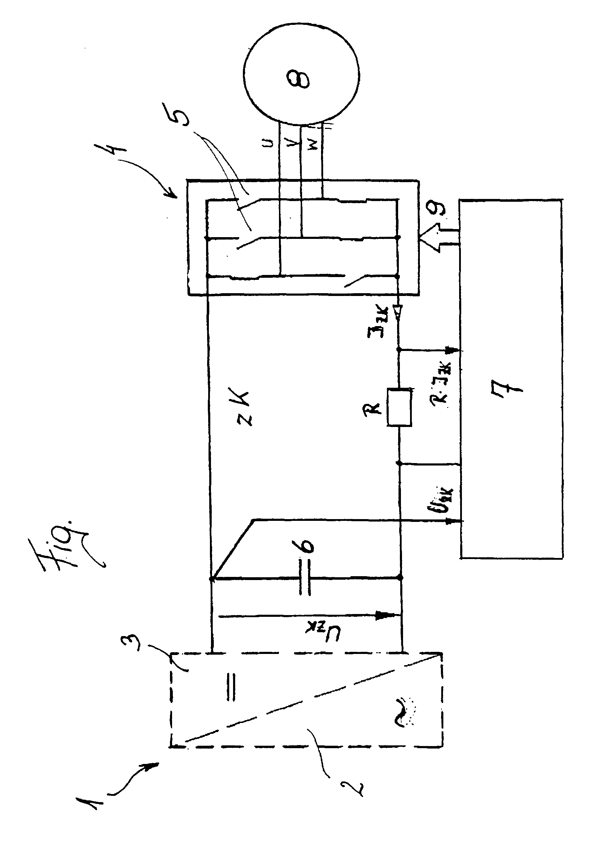

Die Erfindung wird an Hand eines in der Zeichnung dargestellten Ausführungsbeispieles näher erläutert.

Die Fig. zeigt in einem Blockschaltbild die Regelung einer Drehstrommaschine.

Gemäß der Fig. wird ein Umrichter 1 an seinem optionellen Wechselspannungseingang 2 von einem Ein- oder Dreiphasen - Wechselspannungsnetz gespeist. Die Gleichspannungsseite 3 ist über den Zwischenkreis zk mit dem Wechselrichter 4, der die Halbleiterventile 5 aufweist, verbunden. Über einen Kondensator 6 wird die Zwischenkreisspannung Uzk der Meß- und Steuereinheit 7 zugeführt. Ferner wird auch über den Widerstand R der Zwischenkreisstrom Izk der Meß- und Steuereinheit 7 eingegeben. Der aktuelle Schaltzustand des Umrichters 1 wird ebenfalls von der Meß- und Steuereinheit 7 erfaßt. An der Brückenschaltung der Halbleiterventile 5 ist die zu regelnde Drehstrommaschine 8 angeschlossen. Über die von der Meß- und Steuereinheit 7 errechneten Ansteuersignale 9 wird der Wechselrichter 4 angesteuert

Abschließend sei festgehalten, daß in den unterschiedlich beschriebenen i Ausführungsbeispielen gleiche Teile mit gleichen Bezugszeichen bzw. mit gleichen

Bauteilbezeichnungen versehen sind, wobei in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Der Ordnung halber sei abschließend darauf hingewiesen, daß zum besseren Verständnis des Aufbaus der Regelung die Bestandteile teilweise unmaßstäblich und/oder vergrößert und/oder verkleinert dargestellt wurden.

## Patentansprüche

1. Verfahren zur Regelung einer mechanisch drehgeberlosen, als asynchron oder synchron laufende Maschine ausgebildeten Drehstrommaschine, die über einen Umrichter mit Zwischenkreis gespeist ist, wobei für die Regelung Meßgrößen des Zwischenkreises unter Einbeziehung des aktuellen Schaltzustandes des Umrichters erfaßt werden, **dadurch gekennzeichnet, daß** bei Asynchronmaschinen die zur feldorientierten Regelung notwendige Flußrichtung und bei synchron laufenden Maschinen zur rotororientierten Regelung die Rotorposition über die räumlich magnetischen Leitwertsschwankungen in der Maschine meßtechnisch erfaßt werden, wobei die Leitwertsschwankungen über Meßgrößen des Zwischenkreises, insbesondere über den Zwischenkreisstromanstieg und/oder die Zwischenkreisspannung und unter Einbeziehung des aktuellen Schaltzustandes des Umrichters erfaßt werden und daß anschließend eine mathematische Auswertung zur Berechnung der Flußrichtung bzw. der Rotorposition erfolgt.

2. Verfahren nach Anspruch 1, **dadurch gekennzeichnet, daß** mindestens zwei Messungen des Anstieges des Zwischenkreisstromes durchgeführt werden und die Meßwerte der beiden Anstiege in die Statorspannungsgleichungen eingesetzt werden und eine mathematische Verknüpfung durchgeführt wird.

3. Verfahren nach Anspruch 1 oder 2, **dadurch gekennzeichnet, daß** mindestens zwei Leitwertsmessungen in räumlich verschiedene Richtungen durchgeführt werden und die Meßwerte in die Modellgleichungen:

$$yA = ymittel + \Delta y \cos(2\gamma A - 2\gamma)$$

$$yB = ymittel + \Delta y \cos(2\gamma B - 2\gamma)$$

$$yC = ymittel + \Delta y \cos(2\gamma C - 2\gamma)$$

eingesetzt werden und der Winkel $\gamma$ nach bekannten Rechenregeln berechnet wird, wobei yA, yB und yC den Meßwert des Leitwertes in Strang A, B und C, ymittel den mittleren Leitwert, $\Delta y$ die Leitwertschwankung und $\gamma$ den Winkel, der mit dem Leitwertmaximum korrespondiert, bedeuten.

4. Verfahren nach mindestens einem der Ansprüche 1-3, **dadurch gekennzeichnet, daß** die meßtechnisch erfaßten Leitwerte unter, mit ausreichender Genauigkeit, gleichen Zwischenkreisspannungen erfaßt werden.

5. Verfahren nach mindestens einem der Ansprüche 1-4, **dadurch gekennzeichnet, daß** drehzahl- und / oder lastabhängige, vorzugsweise lineare, Korrekturfunktionen in der Form:

$$\gamma \text{ (korrigiert)} = \gamma + \Delta\gamma \text{ (Drehzahl, Last)}$$

bei der mathematischen Berechnung durchgeführt werden, wobei $\gamma$ den Winkel, der mit dem Leitwertmaximum korrespondiert, bedeutet.

6. Verfahren nach mindestens einem der Ansprüche 1-5, **dadurch gekennzeichnet, daß** der ermittelte Fluß- bzw. Rotorlagewinkel als Eingangsgröße in ein Maschinenmodell zur Regelung der Drehstrommaschine on-line verwendet wird.

## Claims

1. Method for regulating an asynchronous or synchronous three-phase machine without a mechanical rotary transducer, which is supplied with D.C. power by an inverter, functioning under any operational conditions, whereby the parameters of the D.C. link using the actual switching state of the inverter are detected for regulation, **characterised by** the fact that in asynchronous machines the flow direction required for field-oriented control, and in synchronous machines the rotor position for rotor-oriented control are measured using the spatial magnetic conductivity fluctuations in the machine, whereby the conductivity fluctuations are detected using the parameters for the D.C. link, and in particular using the D.C. link current increase and/or D.C. link voltage, and using the actual switching state of the inverter, and by the fact that this is followed by a mathematical evaluation to calculate the flow direction or the rotor position.

2. Method according to Claim 1, **characterised by** the fact that at least two measurements of the increase in D.C. link current are carried out, and the measured values of the two increases are entered into the stator voltage equations and linked mathematically.

3. Method according to Claim 1 or 2, **characterised by** the fact that at least two conductivity measurements are carried out in spatially separate directions, and the values introduced into the model equations:

$$yA = ymean + \Delta y \cos(2\gamma A - 2\gamma)$$

$$yB = ymean + \Delta y \cos(2\gamma B - 2\gamma)$$

$$yC = ymean + \Delta y \cos(2\gamma C - 2\gamma)$$

are used and the angle $\gamma$ is calculated according to known arithmetic rules, whereby yA, yB and yC are the measured conductivity values in phases A, B and C, ymean is the mean conductivity value, $\Delta y$ is the conductivity fluctuation, and $\gamma$ is the angle that corresponds with the maximum conductivity.

4. Method according to at least one of Claims 1 to 3, **characterised by** the fact that the conductivity values detected by means of measurement are detected at different D.C. link voltages with sufficient accuracy.

5. Method according to at least one of Claims 1 to 4, **characterised by** the fact that speed- and/or load-dependent correction functions, preferably linear, in the form:

$$\gamma \text{ (corrected)} = \gamma + \Delta\gamma \text{ (speed, load)}$$

are introduced into the mathematical calculation, whereby $\gamma$ is the angle that corresponds with the maximum conductivity.

6. Method according to at least one of Claims 1 to 5, **characterised by** the fact that the determined flux or rotor position angle is used as an input parameter in a machine model for on-line control of the three-phase machine.

## Revendications

1. Procédé de régulation d'une machine à courant triphasé, sans resolver au niveau mécanique, conçue comme une machine fonctionnant de manière asynchrone ou synchrone, qui est alimentée via un convertisseur de fréquences avec circuit intermédiaire, des grandeurs mesurées du circuit intermédiaire étant saisies, pour la régulation, en tenant compte de l'état de commutation actuel du convertisseur de fréquences, **caractérisé en ce que**, dans les machines asynchrones, le sens du flux nécessaire pour la régulation orientée champ et, dans les machines synchrones, la position du rotor pour une régulation orientée rotor, sont déterminés par une technique de mesure en utilisant les fluctuations de conductance magnétiques spatiales dans la machine, les fluctuations de conductance magnétiques étant saisies via les grandeurs mesurées du circuit intermédiaire, notamment via l'augmentation du courant du circuit intermédiaire et/ou la tension du circuit intermédiaire et en tenant compte de l'état de commutation actuel du convertisseur de fréquences, et qu'ensuite il se produit une évaluation mathématique pour le calcul du sens du flux et/ou de la position du rotor.

2. Procédé selon la revendication 1, **caractérisé en ce qu'**au moins deux mesures de l'augmentation du courant dans le circuit intermédiaire sont effectuées, et que les valeurs de mesure des deux augmentations sont substituées dans les équations de tension du stator et qu'une fonction mathématique est réalisée.

3. Procédé selon l'une des revendications 1 ou 2, **caractérisé en ce qu'**au moins deux mesures de conductance sont réalisées dans différentes directions spatiales et que les valeurs de mesure sont substituées dans les équations modèles :

$$yA = ymoyen + \Delta y \cos(2\gamma A - 2\gamma)$$

$$yB = ymoyen + \Delta y \cos(2\gamma B - 2\gamma)$$

$$yC = ymoyen + \Delta y \cos(2\gamma C - 2\gamma)$$

et que l'angle $\gamma$ est calculé selon les règles arithmétiques bien connues, yA, yB et yC étant la valeur de mesure de la conductance dans les phases A, B et C, ymoyen étant la conductance moyenne, $\Delta y$ la fluctuation de la conductance et $\gamma$ l'angle correspondant au maximum de la conductance.

4. Procédé selon au moins l'une des revendications 1-3, **caractérisé en ce que** les valeurs de conductance déterminées par une technique de mesure sont saisies, avec une précision suffisamment grande, en présence des mêmes tensions de circuit intermédiaire.

**5.** Procédé selon au moins l'une des revendications 1-4, **caractérisé en ce que** des fonctions de correction, linéaires de préférence, et fonction de la vitesse de rotation et/ou de la charge sous la forme :

γ (corrigé) = γ + Δγ (vitesse de rotation, charge)

sont exécutées lors du calcul mathématique, γ étant l'angle correspondant au maximum de la conductance.

**6.** Procédé selon au moins l'une des revendications 1-5, **caractérisé en ce que** l'angle de position du rotor ou du flux déterminé est utilisé comme paramètre d'entrée dans un modèle de machine pour la régulation en ligne de la machine triphasée.

Fig.

EP 1 051 801 B1